# EUROPÄISCHE PATENTSCHRIFT

(11) **EP 2 477 748 B1**
(45) Veröffentlichungstag und Bekanntmachung des Hinweises auf die Patenterteilung: **21.05.2014**
(21) Anmeldenummer: 10750093.6
(22) Anmeldetag: 26.08.2010
(51) Int. Cl.: B03C 3/013, B03C 3/49, B03C 3/68, F01N 3/01, F01N 3/023, F01N 3/027

(54) **VORRICHTUNG ZUR BEHANDLUNG VON RUSSPARTIKEL ENTHALTENDEM ABGAS**
APPARATUS AND METHOD FOR TREATMENT OF EXHAUST GAS CONTAINING PARTICULATE MATTER
DISPOSITIF DE TRAITEMENT DE GAZ D'ÉCHAPPEMENT CHARGÉS DES PARTICULES

(30) Priorität: 14.09.2009 DE 102009041091
(43) Veröffentlichungstag der Anmeldung: 25.07.2012
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); HIRTH, Peter, 51503 Rösrath (DE); BRÜCK, Rolf, 51429 Bergisch Gladbach (DE)
(74) Vertreter: Rössler, Matthias
(86) Internationale Anmeldenummer: PCT/EP2010/062475
(87) Internationale Veröffentlichungsnummer: WO 2011/029730

(56) Entgegenhaltungen:
- EP-A1- 1 640 573
- EP-B1- 1 669 563
- JP-A- 2007 187 132

## Beschreibung

Die vorliegende Erfindung betrifft eine Vorrichtung zur Behandlung von Rußpartikel enthaltendem Abgas, insbesondere mit einem so genannten elektrostatischen Filter bzw. Elektrofilter, sowie ein geeignetes Verfahren zur Umsetzung von Rußpartikeln eines Abgases. Die Erfindung findet insbesondere Anwendung bei der Behandlung von Abgasen mobiler Verbrennungskraftmaschinen im Kraftfahrzeugbereich, insbesondere bei der Behandlung von Abgasen resultierend aus Diesel-Kraftstoff.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

So werden für solche Elektrofilter regelmäßig (mehrere) Sprühelektroden und Kollektorelektroden vorgeschlagen, die in der Abgasleitung positioniert werden. Dabei werden beispielsweise eine zentrale Sprühelektrode, welche etwa mittig durch die Abgasleitung verläuft, und eine umgebende Mantelfläche der Abgasleitung als Kollektorelektrode dazu genutzt, einen Kondensator auszubilden. Mit dieser Anordnung von Sprühelektrode und der Kollektorelektrode wird quer zur Strömungsrichtung des Abgases ein elektrisches Feld gebildet, wobei die Sprühelektrode beispielsweise mit einer Hochspannung betrieben werden kann, die im Bereich von ca. 15 kV liegt. Hierdurch können sich insbesondere Corona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulomb-Kräfte zur Kollektorelektrode.

Neben Systemen, bei denen die Abgasleitung als Kollektorelektrode ausgeführt ist, sind auch Systeme bekannt, bei denen die Kollektorelektrode beispielsweise als Drahtgitter ausgebildet ist. Dabei erfolgt die Anlagerung von Partikeln an dem Drahtgitter zu dem Zweck, die Partikel gegebenenfalls mit weiteren Partikeln zusammenzuführen, um so eine Agglomeration zu realisieren. Das das Gitter durchströmende Abgas reißt dann die größeren Partikel wieder mit und führt sie klassischen Filtersystemen zu.

Auch wenn sich die oben beschriebenen Systeme bislang zumindest in Versuchen geeignet für die Behandlung von Rußpartikeln herausgestellt haben, stellt doch die Umsetzung dieses Konzeptes für den Serienbetrieb bei Kraftfahrzeugen eine große Herausforderung dar. Dies gilt insbesondere hinsichtlich der stark schwankenden, zeitweilig sehr hohen Rußbelastung im Abgas, sowie hinsichtlich der gewünschten Nachrüstbarkeit eines solchen Systems für derzeit existierende Abgasanlagen. Insbesondere treten in Abgassystem von Kraftfahrzeugen regelmäßig stoßartig ansteigende Abgasmengen auf, die beispielsweise bei stationären Verbrennungskraftmaschinen, die zur Stromerzeugung eingesetzt werden, nicht auftreten. Weiterhin sind Abgassysteme, beispielsweise aufgrund von Bodenunebenheiten, mechanischen Belastungen ausgesetzt, beispielsweise durch Stöße, etc. Zudem ist zu berücksichtigen, dass mit der gesteigerten Leistung solcher Abgasanlagen hinsichtlich der Beseitigung von Rußpartikeln auch die (periodische oder kontinuierliche) Regenerierung der Filtersysteme erforderlich ist, bei der der Ruß in gasförmige Bestandteile überführt wird.

Bei der Regeneration von Filtersystemen ist neben der intermittierenden Regeneration durch kurzzeitiges Aufheizen, das heißt Verbrennen des Rußes (katalytisch motivierte, oxidative Umsetzung), auch bekannt, Ruß mittels Stickstoffdioxid (NO₂) umzuwandeln. Der Vorteil der kontinuierlichen Regeneration mit Stickstoffdioxid ist, dass die Umwandlung von Ruß hier bereits bei deutlich tieferen Temperaturen (insbesondere kleiner 250 °C) stattfinden kann. Aus diesem Grund ist die kontinuierliche Regeneration in vielen Anwendungsfällen bevorzugt. Das führt jedoch zu dem Problem, dass sichergestellt sein muss, dass das Stickstoffdioxid im Abgasstrom mit den abgelagerten Rußpartikeln in ausreichendem Umfang in Kontakt kommt.

Auch in diesem Zusammenhang ergeben sich technische Schwierigkeiten bei der Realisierung eines dauerhaften Betriebes solcher Abgasanlagen bei Kraftfahrzeugen, wobei die unterschiedlichen Belastungen der Verbrennungskraftmaschinen zu unterschiedlichen Abgasströmen, Abgaszusammensetzungen und Temperaturen führen.

Beispielsweise offenbart die JP 2007-187132 eine Abgasnachbehandlungsvorrichtung mit einem Ionisierungselement und einem Zyklotronabscheider. Das Ionisierungselement ionisiert die im Abgas enthaltenen Rußpartikel. Die Partikel werden dann zu dem Zyklotronabscheider geführt, wo sie von dem Abgasstrom separiert werden.

Hiervon ausgehend ist es Aufgabe der vorliegenden Erfindung, die mit Bezug auf den Stand der Technik geschilderten Probleme zumindest teilweise zu lösen. Insbesondere soll eine Vorrichtung zur Behandlung von Rußpartikeln enthaltendem Abgas angegeben werden, die gleichermaßen eine hohe Abscheidewirkung für Rußpartikel bereitstellt und gut regenerierbar ist. Auch soll ein entsprechendes Verfahren zur Umsetzung von Rußpartikeln eines Abgases angegeben werden. Die Vorrichtung sowie das Verfahren sollen sich leicht in bestehende mobile Abgassysteme integrieren und sich gleichermaßen kostengünstig herstellen lassen.

Diese Aufgaben werden gelöst mit einer Vorrichtung gemäß den Merkmalen des Patentanspruches 1 sowie einem Verfahren zur Umsetzung von Rußpartikeln eines Abgases gemäß den Schritten des Patentanspruches 6. Weitere vorteilhafte Ausgestaltungen der Erfindung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die Erfindung betrifft eine Vorrichtung zur Behandlung von Rußpartikel enthaltendem Abgas, umfassend zumindest
- mindestens ein Ionisierungselement zur Ionisierung von Rußpartikeln,
- mindestens eine Abscheidevorrichtung, umfassend zumindest einen Oberflächenabscheider zur Ablagerung von ionisierten Rußpartikeln,
wobei die mindestens eine Abscheidevorrichtung mindestens zwei zumindest teilweise elektrisch leitfähige und zueinander elektrisch isolierte Neutralisierungsbereiche zur Neutralisation ionisierter Rußpartikel aufweist.

Die hier vorgeschlagene Vorrichtung kann insbesondere Teil einer Abgasanlage eines Kraftfahrzeuges sein, welches einen Diesel-Motor aufweist. Die Vorrichtung kann aber auch als modularer Bausatz für eine Abgasanlage zur Verfügung gestellt werden.

Bevorzugt ist zunächst wenigstens eine Stickstoffdioxid-Quelle und/oder wenigstens eine Sauerstoff-Quelle, insbesondere stromaufwärts der Abscheidevorrichtung, vorgesehen. Eine solche Stickstoffdioxid-Quelle ist beispielsweise ein katalytischer Konverter, der (zusammen mit anderen Bestandteilen des Abgases, insbesondere Sauerstoff) die Umwandlung von im Abgas enthaltenen Stickoxiden (insbesondere Stickstoffmonoxid NO) hin zu Stickstoffdioxid unterstützt. Grundsätzlich können auch mehrere solcher Stickstoffdioxid-Quellen vorhanden sein, dies ist aber nicht zwingend erforderlich. Üblicherweise kann die Stickstoffdioxid-Quelle mit einem katalytischen Konverter realisiert sein, der einen Wabenkörper mit einer Beschichtung aufweist, wobei die Beschichtung Platin, Rhodium, Palladium oder dergleichen aufweist. Die Stickstoffdioxid-Quelle ist folglich der Verbrennungskraftmaschine nachgeschaltet, befindet sich also zumindest teilweise im Abgassystem. Alternativ kann die Stickstoffdioxidquelle auch mit Hilfe von innermotorischen Maßnahmen an einer Verbrennungskraftmaschine realisiert sein. Beispielsweise kann an einer Verbrennungskraftmaschine als innermotorische Maßnahme eine Abgasrückführung realisiert sein.

Während die Stickstoffdioxid-Quelle beispielsweise bevorzugt bei relativ "kalten Abgassystemen" zum Einsatz kommt (z. B. Dieselmotor-Anwendungen), kann auch eine oxidative Umsetzung der Rußpartikel mit Sauerstoff von einer Sauerstoff-Quelle bei höheren Temperaturen durchgeführt werden (z. B. Benzinmotor-Anwendungen). Als Sauerstoff-Quelle kommen bevorzugt beispielsweise der Verbrennungsmotor selbst oder eine so genannte Sekundärlufteinleitung, also insbesondere die Zufuhr eines sauerstoffhaltigen Gases in die Abgasleitung, in Betracht. Gegebenenfalls kann auch eine chemische Umsetzung mit einem Katalysator Sauerstoff erzeugen, so dass auch dies als Sauerstoff-Quelle angesehen werden kann.

Bevorzugt ist insbesondere eine Vorrichtung, die alternativ mindestens eine Stickstoffdioxid-Quelle oder mindestens eine Sauerstoff-Quelle stromaufwärts des Oberflächenabscheiders oder der Abscheidevorrichtung in der Abgasleitung aufweist.

Darüber hinaus ist mindestens ein Ionisierungselement zur Ionisierung von Rußpartikeln vorgesehen. Bevorzugt ist dabei, dass das Abgas zunächst eine Stickstoffdioxidquelle erreicht, bevor es den Abschnitt der Vorrichtung mit dem mindestens einen Ionisierungselement erreicht. Das Ionisierungselement umfasst bevorzugt eine Ionisierungselektrode bzw. eine Mehrzahl von Ionisierungselektroden. Das mindestens eine Iorlisierungselement ist mit einer Spannungsquelle verbunden, insbesondere mit einer Hochspannungsquelle. Eine Hochspannungsquelle ist eine Spannungsquelle, die elektrische Spannungen von zumindest 5 kV (Kilovolt; 5.000 Volt) erzeugt. Die Spannung kann mittels einer Steuereinheit auch regelbar sein. Grundsätzlich kann eine Gleichstromspannungsquelle oder eine Wechselstromspannungsquelle bereitgestellt werden. Die lonisierungselektrode ist bevorzugt eine Sprühelektrode, die annähernd punkt- oder linienförmig ausgeführt ist. Eine annähernd punktförmige Sprühelektrode kann beispielsweise die Spitze eines Drahtes sein. Eine linienförmige Sprühelektrode kann beispielsweise ein entlang seiner Länge als Sprühelektrode wirkender Draht sein. Der lonisierungselektrode gegenüberliegend ist eine entsprechende Gegenelektrode vorgesehen. Zwischen der Ionisierungselektrode und der Gegenelektrode kann sich ein elektrisches Feld ausbilden. Typischerweise hat die annähernd punkt- oder linienförmige Sprühelektrode gegenüber der Gegenelektrode eine erheblich kleinere Oberfläche. Aus diesem Grund konzentriert sich das elektrische Feld, das sich zwischen Ionisierungselektrode und Gegenelektrode ausbildet, rund um die Ionisierungselektrode sehr stark, so dass aus der Ionisierungselektrode Ladungen austreten können. Vorzugsweise sind die elektrischen Potentiale von lonisierungselektrode und Gegenelektrode so eingerichtet, dass negative Ladungen aus der lonisierungselektrode austreten. Negative Ladungen sind regelmäßig beweglicher als positive Ladungen. Diese Ladungen gelangen in Kontakt mit den Rußpartikeln im Abgas, wenn das Abgas das Ionisierungselement passiert. Dabei werden die Rußpartikel elektrisch geladen. Man spricht dann auch von ionisierten Rußpartikeln.

Im Sinne der Erfindung ist ein Oberflächenabscheider insbesondere eine Vorrichtung, bei welcher Rußpartikel im Wesentlichen in der Nähe einer (3-dimensionalen) Oberfläche abgeschieden werden. Keine Oberflächenabscheider sind dann z. B. Bauteile, bei denen praktisch nur eine linienförmige Ablagerungsregion für Partikel gegeben ist (Sieb, Gitter, etc.). Typische Oberflächenabscheider sind Abgasbehandlungskomponenten, die kanalartige oder chaotische Oberflächen aufweisen, die z. B. bei Wabenstrukturen ausgebildet sind. Bevorzugt sind dabei offene Abscheider bzw. Nebenstromfilter, die für ein Abgas passierbar sind, ohne dass das Abgas eine Filterwand passieren muss. Oberflächenabscheider können aber auch poröse Wandfilter oder Tiefenfilter sein.

Des Weiteren ist mindestens eine Abscheidevorrichtung, aufweisend zumindest einen Oberflächenabscheider vorgesehen. Dieser Oberflächenabscheider weist eine Querschnittsfläche und eine Länge auf. Ein Oberflächenabscheider kann beispielsweise ein metallischer oder keramischer Wabenkörper mit Kanälen sein, die sich von einer Eintrittsfläche zu einer Austrittsfläche erstrecken. Die Kanäle eines solchen Oberflächenabscheiders haben Wandungen, an denen Rußpartikel ablagern können. Bevorzugt sind Oberflächenabscheider, bei denen eine Vielzahl von Kanälen vorgesehen ist, beispielsweise mindestens 30, mindestens 50 oder sogar mindestens 100 Kanäle. Mit dem Begriff "Oberflächenabscheider" soll zum Ausdruck gebracht werden, dass eine (insbesondere auch im Verhältnis zu seinem Volumen) sehr große Oberfläche zur Anlagerung von Rußpartikeln bereitgestellt wird. Im Gegensatz zu bekannten Varianten, bei denen die Rußpartikel nach Möglichkeit aufeinander auf einem eng begrenzten Raum agglomeriert wurden, ist das Ziel hier, die Rußpartikel großflächig über die Oberflächen der durch die Kanäle gebildeten Kanalwände zu verteilen. Dabei soll jedoch nicht ausgeschlossen werden, dass sich Rußpartikel beispielsweise auch im Inneren einer porösen Kanalwand ablagern. Als zur Ablagerung geeignete Oberflächen können hier also insbesondere die außen liegenden und innen liegenden Oberflächen der Kanalwände angesehen werden. Unter einem "Kanal" wird insbesondere ein abgegrenzter Strömungspfad verstanden, dessen Erstreckung deutlich länger als sein Durchmesser ist, wobei der Durchmesser insbesondere deutlich größer als die üblichen Größen der Rußpartikel ist. Auch wenn es für einige Zwecke ausreichend ist, separate und getrennte Kanäle auszubilden, können doch auch kommunizierende Kanäle bereitgestellt werden, bei denen ein Austausch von Teilabgasströmen (z. B. durch Öffnungen in den Kanalwänden hindurch) ermöglicht ist.

Gemäß einer Weiterbildung der Vorrichtung ist die Abscheidevorrichtung ringförmig ausgeführt. Insbesondere ist die Abscheidevorrichtung ringförmig um die ursprüngliche zentrale Strömungsrichtung des Abgases angeordnet, so dass das Abgas zum Durchströmen der Abscheidevorrichtung zumindest teilweise abgelenkt wird. Die Abscheidevorrichtung ist somit insbesondere in einem ringförmig gestalteten Katalysatorträger integriert. Dann ist es insbesondere möglich, eine zentrale Abgasströmung mit erhöhter Partikelkonzentration hindurchzuführen und gleichzeitig eine äußere Abgasströmung mit reduzierter Partikelkonzentration in den Katalysatorträger zu führen, z. B. einen SCR-Katalysator.

Damit keine Anlagerung von Rußpartikeln in nur einer Ebene senkrecht zur Strömungsrichtung (wie bei einem Gitter) eintritt, weist der mindestens eine Oberflächenabscheider mindestens zwei zumindest teilweise elektrisch leitfähige zueinander elektrisch isolierte Neutralisierungsbereiche zur Neutralisation ionisierter Rußpartikel auf.

Ionisierte Rußpartikel lagern sich bevorzugt an entgegengesetzt geladenen Oberflächen bzw. an neutral geladenen Oberflächen an.

Neutralisierungsbereiche können durch Verbindung mit einer Spannungsquelle oder einer elektrischen Masse ein bestimmtes elektrisches Potential aufweisen und damit elektrisch geladen sein. Aufgrund des durch eine Spannungsquelle oder eine Masse vorliegenden elektrischen Potentials an einem Neutralisierungsbereich liegt eine elektrische Ladung auf dem Neutralisierungsbereich vor. So kann bei Kontakt der elektrisch geladenen Rußpartikel an einer Oberfläche eines Oberflächenabscheiders in einem Neutralisierungsbereich eine elektrische Neutralisation bzw. eine Entionisierung der Rußpartikel stattfinden. Ionisierte bzw. elektrisch geladene Rußpartikel werden auch über Distanzen hinweg von den elektrischen Kräften derartiger Neutralisierungsbereiche angezogen- oder abgestoßen.

Die Neutralisierungsbereiche der Abscheidevorrichtung können gleichzeitig auch zumindest teilweise die Gegenelektrode des Ionisierungselementes bilden.

Zwischen dem mindestens einen lonisierungselement und der mindestens einen Abscheidevorrichtung bzw. dem Neutralisierungsbereich der mindestens einen Abscheidevorrichtung ist regelmäßig ein elektrisches Feld gebildet. Dieses elektrische Feld erstreckt sich insbesondere so in Richtung des Abgassystems bzw. in Strömungsrichtung des Abgases, dass elektrisch geladene Rußpartikel durch das elektrische Feld in Strömungsrichtung gezogen werden, wobei das Abgas zunächst das mindestens eine Ionisierungselement und später die mindestens eine Abscheidevorrichtung mit deren Neutralisierungsbereichen erreicht. Damit liegen das mindestens eine Ionisierungselement und die Neutralisierungsbereiche in Strömungsrichtung des Abgases hintereinander, insbesondere mit einer Distanz von mehreren cm (Zentimetern), wie beispielsweise mindestens 5 cm, mindestens 15 cm oder sogar mindestens 30 cm.

Alternativ ist es auch möglich, dass Ionisierungselement und Abscheidevorrichtung und daran ausgebildete Neutralisierungsbereiche elektrisch voneinander unabhängig sind. Ionisierte Rußpartikel werden dabei durch die Abgasströmung von dem Ionisierungselement unabhängig von einem gegebenenfalls vorliegenden elektrischen Feld in die Abscheidevorrichtung gefördert. Bevorzugt ist dabei, dass zwischen dem mindestens einen Ionisierungselement und den Neutralisierungsbereichen kein elektrisches Feld vorliegt. Vielmehr sind in einer derartigen Ausgestaltung das lonisierungselement und die Abscheidevorrichtung mit ihren Neutralisierungsbereichen zur Neutralisation von ionisierten Rußpartikeln jeweils voneinander getrennte Systeme, die als so genannte "Black-Box-Systeme" verstanden werden können. Die jeweiligen genauen technischen Verfahren und Anordnungen, mit welchen in dem Ionisierungselement die Ionisation bzw. im Oberflächenabscheider die Ablagerung der ionisierten Rußpartikel erfolgt, können dann beliebig und unabhängig voneinander von einem Fachmann gewählt werden.

Durch die Ausbildung zweier elektrisch zueinander isolierter Neutralisierungsbereiche an der mindestens einen Abscheidevorrichtung ist es möglich, die Verteilung der Rußpartikel im Oberflächenabscheider zu beeinflussen. Beispielsweise kann ein Neutralisierungsbereich derart ausgebildet sein, dass eine Neutralisierung von ionisierten Rußpartikeln in diesem Bereich nur hin bis zu einer gewissen Grenzbeladung des Oberflächenabscheiders mit Rußpartikeln erfolgt.

Zum Erreichen einer möglichst gleichmäßigen Ablagerung von Rußpartikeln im Oberflächenabscheider kann die Form, Größe und Anzahl der Neutralisierungsbereiche und auch der Oberflächenabscheider selbst entsprechend angepasst sein. Es ist auch möglich, die einzelnen voneinander elektrisch isolierten Neutralisierungsbereiche unterschiedlich mit Spannungsquellen und/oder elektrischen Massen zu beschalten. Zusätzlich kann die elektrische Feldstärke zwischen den Neutralisierungsbereichen und dem Ionisierungselement modelliert werden, um die Ablagerung von ionisierten Rußpartikeln im Oberflächenabscheider zu beeinflussen.

Gemäß einer bevorzugten Ausgestaltung der hier behandelten Vorrichtung sind die Neutralisierungsbereiche jeweils Teilbereichen des mindestens einen Oberflächenabscheiders zuordenbar.

Bevorzugt ist, dass der Oberflächenabscheider zumindest teilweise elektrisch leitfähig ist, so dass die auf den ionisierten Rußpartikeln vorliegende elektrische Ladung, welche mit Ablagerung der Rußpartikeln auf dem Oberflächenabscheider zumindest teilweise auf den Oberflächenabscheider übergeht, von diesem abfließen kann. Ein elektrisch isolierter Oberflächenabscheider erhält durch die Ablagerung von ionisierten Rußpartikeln auf Dauer eine elektrische Ladung, die weitere geladene ionisierte Rußpartikel von der Ablagerung abhalten kann. Ein derartiger Oberflächenabscheider kann mehrere Teilbereiche aufweisen, die jeweils elektrisch leitfähig sind und jeweils einen Neutralisierungsbereich des Oberflächenabscheiders bilden, wobei diese elektrisch leitfähigen Teilbereiche gegeneinander elektrisch isoliert sind.

Alternativ ist es auch möglich, dass die Neutralisierungsbereiche nicht Teilbereichen des Oberflächenabscheiders zuordenbar sind, sondern beispielsweise als flächige Elektroden um den Oberflächenabscheider herum angeordnet sind. Bei einer solchen Anordnung ist bevorzugt ein elektrisch nicht leitfähiger Oberflächenabscheider vorgesehen. Beispielsweise können die Neutralisierungsbereiche derart angeordnet sein, dass ein senkrecht zur Strömungsrichtung des Abgases ausgerichtetes elektrisches Feld im Oberflächenabscheider vorliegt. Elektrisch geladene Rußpartikel werden von einem derartigen elektrischen Feld quer zur Abgasströmungsrichtung ausgelenkt und so in Richtung der Kanalwandungen bzw. der Oberflächen des Oberflächenabscheiders bewegt. Eine elektrische Neutralisation der Oberflächen des Oberflächenabscheiders kann beispielsweise dadurch erfolgen, dass die Ausrichtung des elektrischen Feldes zwischen den einzelnen Neutralisierungsbereichen regelmäßig gewechselt wird, so dass ionisierte Rußpartikel jeweils in unterschiedliche Richtungen gezogen werden und die Ladungen sich gegenseitig neutralisieren. Auch möglich ist, dass das Ionisierungselement nicht immer nur ionisierte Rußpartikel gleicher Ladung, also insbesondere immer positiv bzw. immer negativ geladene Rußpartikel erzeugt, sondern die Ladungen der aus dem Ionisierungselement austretenden Rußpartikel regelmäßig wechseln, so dass elektrisch negativ geladene Rußpartikel kurze Zeit später von elektrisch positiv geladenen Rußpartikeln neutralisiert werden.

Den Neutralisierungsbereichen sind jeweils Ansteuerungsmittel zugeordnet, die zumindest eine elektrische Masse, eine einstellbare Spannungsquelle und/oder ein Schalterelement umfassen.

Mit Hilfe derartiger Ansteuerungsmittel können die elektrischen Eigenschaften der Neutralisierungsbereiche zeitlich verändert werden. Beispielsweise ist es möglich, einen Neutralisierungsbereich oder mehrere Neutralisierungsbereiche auf ein solches elektrisches Potential zu bringen, dass an diesem oder diesen die Abscheidung ionisierter Rußpartikel erfolgt. Dies kann beispielsweise dadurch realisiert werden, dass alle Neutralisierungsbereiche über einzelne Schalterelemente mit einer elektrischen Masse verbindbar sind. Es ist auch möglich, dass jeweils einstellbare Spannungsquellen für die Neutralisierungsbereiche vorgesehen sind, so dass jeder Neutralisierungsbereich auf ein vorgebbares elektrisches Potential bringbar ist. Auf diese Art ist es sogar möglich, Rußpartikel aus einzelnen Bereichen des Oberflächenabscheiders gezielt herauszulenken, um sie anderen Bereichen des Oberflächenabscheiders zuzuführen, um dort eine zielgerichtete Ablagerung zu erreichen.

Gemäß einer Weiterbildung der Vorrichtung sind die mindestens zwei Neutralisierungsbereiche als ringförmige Elektroden und/oder als flächige Kontaktierungen ausgebildet.

Wenn derartige Elektroden vorhanden sind, ist der Oberflächenabscheider bevorzugt elektrisch nicht oder nur in geringem Maße leitfähig. Mit geringer Leitfähigkeit ist hier gemeint, dass sich aufgrund der im Oberflächenabscheider auftretenden elektrischen Ströme ein signifikanter Spannungsabfall innerhalb des Oberflächenabscheiders ergibt. Im Oberflächenabscheider treten elektrische Ströme durch die Ladungen der ionisierten Rußpartikel auf.

Wenn als ringförmige Elektroden oder als flächige Kontaktierungen ausgestaltete Neutralisierungsbereiche an der erfindungsgemäßen Vorrichtung vorgesehen sind, sind diese jeweils bevorzugt an der Austrittsfläche und/oder an der Mantelfläche des Oberflächenabscheiders angeordnet. Die Mantelfläche ist die zwischen Eintrittsfläche und Austrittsfläche des Oberflächenabscheiders vorliegende Umfangsfläche. Bevorzugt ist der Oberflächenabscheider zylindrisch geformt. Die Stirnflächen der zylindrischen Form bilden jeweils die Eintrittsfläche und die Austrittsfläche und die Mantelfläche ist die Umfangsfläche der zylindrischen Form.

Eine ringförmige Elektrode kann beispielsweise einen dem Durchmesser des Oberflächenabscheiders entsprechenden Durchmesser aufweisen und an der Austrittsfläche entlang des Umfangs eines Wabenkörpers angeordnet sein. Das elektrische Feld bildet sich dann hin zu dieser ringförmigen Elektrode in den Außenbereich des Oberflächenabscheiders aus, so dass ionisierte Rußpartikel insbesondere hierhin transportiert werden. Dies ist insbesondere vorteilhaft, weil die Abgasströmungsgeschwindigkeit im äußeren Bereich eines Oberflächenabscheiders normalerweise gegenüber dem inneren Bereich erheblich herabgesetzt ist, so dass durch einen verstärkten Transport von ionisierte Rußpartikeln in den äußeren Bereich eine gleichmäßigere Ablagerung von ionisierte Rußpartikeln in dem Oberflächenabscheider erfolgt.

Eine flächige Kontaktierung ist vorzugsweise flächig am Austrittsbereich des Oberflächenabscheiders ausgebildet. Hierdurch wird ein effektiver Transport von ionisierten Rußpartikeln in die Kanäle des Oberflächenabscheiders hinein erreicht.

Die erfindungsgemäße Vorrichtung ist weiterhin vorteilhaft, wenn für jeden Neutralisierungsbereich im Oberflächenabscheider ein Wabenkörper vorgesehen ist. Ein derartiger Wabenkörper kann bevorzugt scheibenförmig sein.

Derartige Wabenkörper können entweder elektrisch leitfähig oder nicht elektrisch leitfähig sein. Elektrisch leitfähige Wabenkörper sind bevorzugt metallisch oder aus einem keramischen Material, in welchem elektrische Leitstrukturen, beispielsweise elektrisch leitfähige Fasern, eingelagert sind, um eine elektrische Leitfähigkeit herzustellen. Nicht elektrisch leitfähige Wabenkörper sind bevorzugt keramische Wabenkörper. Wenn für jeden Neutralisierungsbereich ein eigener scheibenförmiger Wabenkörper vorgesehen ist, können diese Wabenkörper jeweils zueinander beabstandet angeordnet sein. Außerdem kann eine Isolierung der einzelnen Wabenkörper gegen das Gehäuse vorhanden sein. So kann eine Isolierung der einzelnen Neutralisierungsbereiche zueinander ausgeführt sein.

Wenn die einzelnen Wabenkörper nicht leitfähig sind, ist bevorzugt jeweils eine flächige Kontaktierung an den Austrittsseiten der einzelnen Wabenkörper vorgesehen. Bei nicht leitfähigen Wabenkörpern ist jeweils nur die Kontaktierung als Neutralisierungsbereich anzusehen.

Elektrisch leitfähige Wabenkörper können beliebig kontaktiert werden. Durch eine Kontaktierung wirkt der gesamte elektrisch leitfähige Wabenkörper als Elektrode und ist damit auch als ganzes Neutralisierungsbereich. Innerhalb elektrisch leitfähiger Wabenkörper bildet sich regelmäßig kein elektrisches Feld aus, sondern elektrische Felder bestehen nur bis an die Außenflächen derartiger elektrisch leitfähiger Wabenkörper, weil in einem elektrisch leitfähigem Wabenkörper regelmäßig ein einheitliches elektrisches Potential vorliegt. Elektrisch leitfähige Wabenkörper sind jeweils vollständig als Neutralisierungselement anzusehen. Elektrisch leitfähige Wabenkörper sind beispielsweise aus metallischen Lagen, vorzugsweise aus glatten und gewellten metallischen Lagen, aufgebaut, insbesondere gewickelt, gewunden und/oder gestapelt.

Auch ist es möglich, teilweise elektrisch leitfähige Wabenkörper einzusetzen. Entweder kann die Leitfähigkeit derartiger teilweise leitfähiger Wabenkörper derart eingeschränkt sein, dass sich aufgrund eines Stromflusses ein Spannungsgefälle innerhalb des Wabenkörpers ergibt oder der Wabenkörper kann elektrisch leitfähige Teilbereiche und elektrisch nicht leitfähige Teilbereiche aufweisen. Beispielsweise ist es möglich, eine Leitfähigkeit des Wabenkörpers im Randbereich vorzusehen. So kann in Randbereichen eine verstärkte Anziehung von ionisierten Rußpartikeln erreicht werden und so können die geringeren Ablagerungsmengen aufgrund der geringen Abgasgeschwindigkeiten in den Randbereichen des Wabenkörpers ausgeglichen werden.

Darüber hinaus erfindungsgemäß ist ein Verfahren zur Umsetzung von Rußpartikeln eines Abgases, umfassend zumindest die folgenden Schritte:
a) Erzeugen von Stickstoffdioxid im Abgas,
b) Ionisieren von Rußpartikeln mittels mit mindestens einem Ionisierungselement,
c) Ablagern von ionisierten Rußpartikeln in mindestens einem Oberflächenabscheider mit mindestens zwei elektrisch leitfähigen Neutralisierungsbereichen zur Neutralisation ionisierter Rußpartikel, und
d) Inkontaktbringen von Stickstoffdioxid mit den abgelagerten Rußpartikeln in dem mindestens einen Oberflächenabscheider,
wobei die mindestens zwei elektrisch leitfähigen Neutralisierungsbereiche jeweils ein elektrisches Potential aufweisen und das elektrische Potential mindestens eines Neutralisierungsbereiches von dem elektrischen Potential der übrigen Neutralisierungsbereiche verschieden ist.

Damit wird insbesondere auch eine kontinuierliche Regeneration von Rußpartikeln bei der erfindungsgemäß vorgeschlagenen Vorrichtung angegeben. Es ist darauf hinzuweisen, dass die mit Bezug auf die Vorrichtung dargestellten Merkmale zur Erläuterung des Verfahrens herangezogen werden können und umgekehrt. Das Verfahren kann insbesondere mit der erfindungsgemäßen Vorrichtung durchgeführt werden.

Bevorzugt ist, dass alle Schritte a) bis d) während des Betriebes einer mobilen Verbrennungskraftmaschine permanent durchgeführt werden.

Außerdem ist bevorzugt, dass Schritt a) die Bereitstellung von Stickstoffdioxid durch einen entsprechenden Abgaskonverter und/oder die Bereitstellung von Stickstoffdioxid durch innermotorische Maßnahmen umfasst. Eine innermotorische Maßnahme kann hier beispielsweise eine Abgasrückführung sein.

Durch eine Beeinflussung des elektrischen Potentials der Neutralisierungsbereiche kann die Ablagerung von Rußpartikeln im Oberflächenabscheider beeinflusst werden.

Bevorzugt ist eine Verfahrensführung beim erfindungsgemäßen Verfahren, bei welcher die elektrischen Potentiale der mindestens zwei Neutralisierungsbereiche derart eingestellt sind, dass sich Rußpartikel im Oberflächenabscheider im Wesentlichen gleichmäßig ablagern. Bevorzugt erfolgt dabei eine gleichmäßige Ablagerung auf (bzw. in) den Oberflächen des Oberflächenabscheiders.

Besonders vorteilhaft ist das erfindungsgemäße Verfahren auch, wenn die elektrischen Potentiale der Neutralisierungsbereiche zeitlich variiert werden. Beispielsweise ist es möglich, einen Neutralisierungsbereich mit einem bestimmten elektrischen Potential zu versehen, um hier zunächst eine Ablagerung von ionisierten Rußpartikeln zu erreichen und anschließend an diesen Neutralisierungsbereich ein anderes elektrisches Potential anzulegen, um eine Ablagerung von ionisierten Rußpartikeln in der Nähe dieses Neutralisierungsbereiches zu stoppen. Gleichzeitig kann an einen anderen Neutralisierungsbereich ein elektrisches Potential angelegt werden, um hier eine Ablagerung von ionisierten Rußpartikeln zu erreichen bzw. zu begünstigen.

Es sind verschiedene Vorgehensweisen denkbar, wie durch eine zeitliche Variation der elektrischen Potentiale an den Ionisierungsbereichen eine Vergleichmäßigung der Ablagerung von ionisierten Rußpartikeln begünstigt werden kann.

In einer ersten Ausführungsvariante des erfindungsgemäßen Verfahrens werden die elektrischen Potentiale der Neutralisierungsbereiche mit hohen Frequenzen, beispielsweise mit Frequenzen oberhalb vom 10 kHz, 20 kHz oder sogar 50 kHz, variiert (hochfrequente Variation). Bei dieser Ausführungsvariante tritt eine zu jedem Zeitpunkt im Wesentlichen gleichmäßige Ablagerung von ionisierten Rußpartikeln auf allen Oberflächen des Oberflächenabscheiders auf.

In einer zweiten Ausführungsvariante werden elektrische Potentiale der einzelnen Neutralisierungsbereiche mit sehr niedrigen Frequenzen variiert. Beispielsweise können die elektrischen Potentiale der einzelnen Neutralisierungsbereiche maximal einmal in 1 Minute, bevorzugt maximal einmal in 2 Minuten und insbesondere maximal einmal in 5 Minuten verändert werden (niederfrequente Variation mit Frequenzen unterhalb einem Hertz [1/Sekunde]). Bei dieser Ausführungsvariante findet jeweils eine bereichsweise Ablagerung von ionisierten Rußpartikeln im Oberflächenabscheider statt und die Ablagerung erfolgt über einen längeren Zeitraum betrachtet über den gesamten Oberflächenabscheider gleichmäßig.

Weiterhin vorteilhaft ist das erfindungsgemäße Verfahren, wenn die Neutralisierungsbereiche jeweils Teilbereichen des Oberflächenabscheiders zuordenbar sind und ein Neutralisierungsbereich deaktiviert wird, wenn im zugeordneten Teilbereich des Oberflächenabscheiders eine maximale Beladung mit Rußpartikeln überschritten wurde.

Bei dieser Verfahrensführung ist bevorzugt immer nur ein Neutralisierungsbereich gleichzeitig mit einer Massenelektrode verbunden und in dem zugeordneten Teilbereich erfolgt eine Ablagerung von ionisierten Rußpartikeln. Die übrigen Teilbereiche laden sich durch die Ablagerung von ionisierten Rußpartikeln elektrisch so weit auf, dass weitere ionisierte Rußpartikel an diesen Teilbereichen nicht mehr anlagern können, sondern bis zu dem jeweiligen aktivierten Neutralisierungsbereich vordringen.

Auch vorteilhaft ist das erfindungsgemäße Verfahren, wenn alle Neutralisierungsbereiche unterschiedliche elektrische Potentiale aufweisen und im Oberflächenabscheider entlang einer Abgasströmungsrichtung ein ansteigendes elektrisches Feld oder ein abfallendes elektrisches Feld existiert.

Für die erfolgreiche Ablagerung von elektrisch geladenen Rußpartikeln in einem Oberflächenabscheider ist es förderlich, dass durch den Oberflächenabscheider die elektrische Ladung der angelagerten Rußpartikel abfließen kann, weil sich sonst die Oberflächen des Oberflächenabscheiders elektrisch aufladen. Weiterhin ist es vorteilhaft, wenn ein elektrisch leitfähiger Wabenkörper in seinem Inneren im Wesentlichen kein elektrisches Feld aufweist, solange kein Stromfluss im Wabenkörper vorliegt. Um ein ansteigendes- oder abfallendes elektrisches Potential in einem elektrisch leitfähigen Oberflächenabscheider zu realisieren, ist es erforderlich, verschiedene Teilbereiche des Oberflächenabscheiders gegeneinander elektrisch zu isolieren. Mit einer derartigen Anordnung kann erreicht werden, dass das elektrische Feld im Oberflächenabscheider von der Eintrittsfläche zur Austrittsfläche so aufgebaut ist, dass eine im Wesentlichen gleichmäßige Anhaftung von ionisierten Rußpartikeln im Oberflächenabscheider und insbesondere über die Länge des Oberflächenabscheiders auftritt.

Auch erfindungsgemäß ist ein Kraftfahrzeug, aufweisend eine Verbrennungskraftmaschine mit einem Abgassystem aufweisend eine erfindungsgemäße Vorrichtung oder mit einem Abgassystem, welches zur Durchführung eines erfindungsgemäßen Verfahrens eingerichtet ist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, auf die diese jedoch nicht beschränkt ist. Es zeigen schematisch:
- Fig. 1:: ein Kraftfahrzeug, aufweisend eine bevorzugte Ausführungsvariante einer erfindungsgemäßen Vorrichtung;
- Fig. 2:: ein Detail einer bevorzugten Ausführungsvariante einer erfindungsgemäßen Vorrichtung;
- Fig. 3:: einen Längsschnitt durch einen Oberflächenabscheider für eine bevorzugte Ausführungsvariante einer erfindungsgemäßen Vorrichtung;
- Fig. 4:: ein Diagramm des elektrischen Potentials in einer bevorzugten Ausführungsvariante einer erfindungsgemäßen Vorrichtung während der Durchführung einer bevorzugten Ausführungsvariante eines erfindungsgemäßen Verfahrens;
- Fig. 5:: einen Querschnitt durch einen Oberflächenabscheider für eine weitere bevorzugte Ausführungsvariante der erfindungsgemäßen Vorrichtung;
- Fig. 6:: einen Längsschnitt durch einen Oberflächenabscheider für eine weitere bevorzugte Ausführungsvariante der erfindungsgemäßen Vorrichtung;
- Fig. 7:: einen Längsschnitt durch einen Oberflächenabscheider für eine weitere bevorzugte Ausführungsvariante der erfindungsgemäßen Vorrichtung; und
- Fig. 8:: eine Illustration des erfindungsgemäßen Verfahrens.

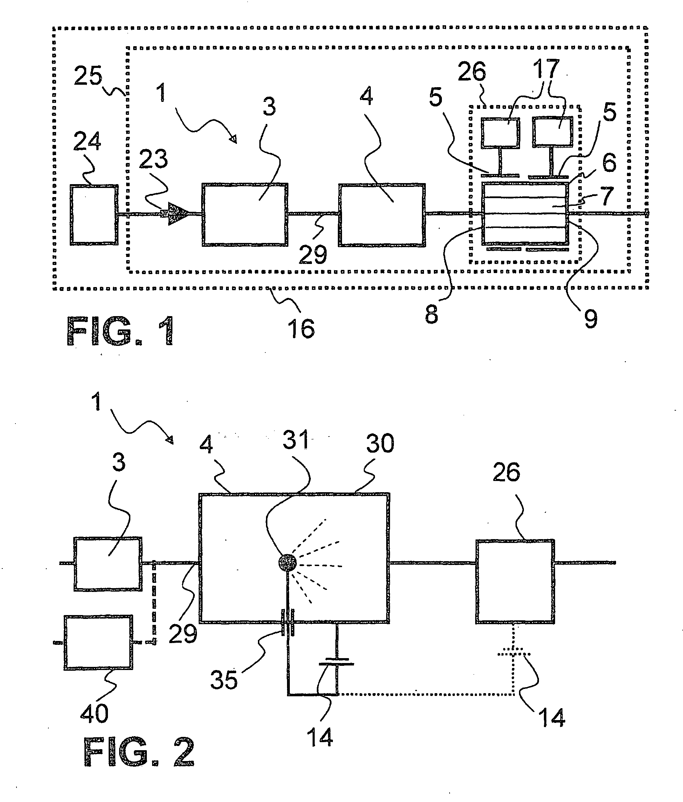

Fig. 1 zeigt ein Kraftfahrzeug 16, aufweisend eine Verbrennungskraftmaschine 24 und ein Abgassystem 25 mit einer Abgasleitung 29, welche ausgehend von der Verbrennungskraftmaschine 24 für das Abgas der Verbrennungskraftmaschine 24 in einer Abgasströmungsrichtung 23 durchströmbar ist. An der Abgasleitung 29 im Abgassystem 25 ist eine erfindungsgemäße Vorrichtung 1 zur Behandlung von Rußpartikeln enthaltendem Abgas vorgesehen. Die erfindungsgemäße Vorrichtung 1 weist hintereinander in Abgasströmungsrichtung 23 entlang der Abgasleitung 29 eine Stickstoffdioxidquelle 3, ein Ionisierungselement 4 und einen Oberflächenabscheider 6 auf. Der Oberflächenabscheider 6 ist bevorzugt als Wabenkörper 22 ausgeführt, welcher Kanäle 7 aufweist, die von einem Eintrittsbereich 8 zu einem Austrittsbereich 9 verlaufen. Am Oberflächenabscheider 6 sind Neutralisierungsbereiche 5 vorgesehen. Die Neutralisierungsbereiche 5 sind über Ansteuerungsmittel 17 ansteuerbar. Der Oberflächenabscheider 6, die Neutralisierungsbereiche 5 und die Ansteuerungsmittel 17 bilden zusammen eine Abscheidevorrichtung 26. Die Abscheidevorrichtung 26 und das lonisierungselement 4 können in einer bevorzugten Ausführungsvariante der Erfindung im Verbund miteinander betrieben werden, also gemeinsam angesteuert und geregelt werden oder aber zwei jeweils eigenständige unabhängig vom jeweils anderen Element arbeitende Systeme (so genannte "Black-Box-Systeme") sein, die unabhängig voneinander angesteuert und geregelt werden können.

Fig. 2 zeigt eine erfindungsgemäße Vorrichtung 1, wobei hier besonderes Augenmerk auf die Darstellung des Ionisierungselementes 4 gelegt wurde und die Stickstoffdioxidquelle 3 und die Abscheidevorrichtung 26 in der Abgasleitung 29 nur angedeutet sind. Im Ionisierungselement 4 gemäß Fig. 2 ist eine Sprühelektrode 31 vorgesehen. Zwischen der Sprühelektrode 31 und einem Gehäuse 30 des Ionisierungselementes 4, oder aber zwischen der Sprühelektrode 31 und der Abscheidevorrichtung 26, kann eine Spannung anliegen, die mit Hilfe einer Spannungsquelle 14 erzeugt werden kann. Das Gehäuse 30 bzw. die Abscheidevorrichtung 26 sind dazu von der Sprühelektrode 31 mittels einer elektrischen Isolierung 25 isoliert. Dieser Aufbau ist nicht der einzig mögliche Aufbau für ein Ionisierungselement 4. Beispielsweise können auch stabförmige Sprühelektroden vorgesehen sein. Auch möglich sind Aufbauten von Ionisierungselementen 4, bei welchen die Ionisierung zwischen zwei flächigen Elektroden erfolgt. Beim Einsatz des erfindungsgemäßen Verfahrens wird das in der Stickstoffdioxidquelle 3 erzeugte Stickstoffdioxid zur Regeneration des Oberflächenabscheiders 6 in der Abscheidevorrichtung 26 eingesetzt. Dabei wird durch Reaktion mit dem Stickstoffdioxid der Kohlenstoff in den Rußpartikeln im Oberflächenabscheider 6 zu Kohlendioxid umgesetzt.

Alternativ zur Stickstoffdioxidquelle 3 kann eine Sauerstoffquelle 40 ausgebildet sein, die in Fig. 2 als Alternative gestrichelt mit der Abgasleitung 29 verbunden dargestellt ist. Durch die Bereitstellung von Sauerstoff kann eine Regeneration des Oberflächenabscheiders 6 in der Abscheidevorrichtung 26 erfolgen, bei der eine Oxidation des Kohlenstoffs zu Kohlendioxid erfolgt. Bevorzugt ist in beiden Varianten ein so genannter kontinuierlicher Regenerationsbetrieb, bei dem (unter normalen Betriebsumgebungen in der Abgasleitung) kontinuierlich eine Regeneration des mindestens einen Oberflächenabscheiders 6 erfolgt.

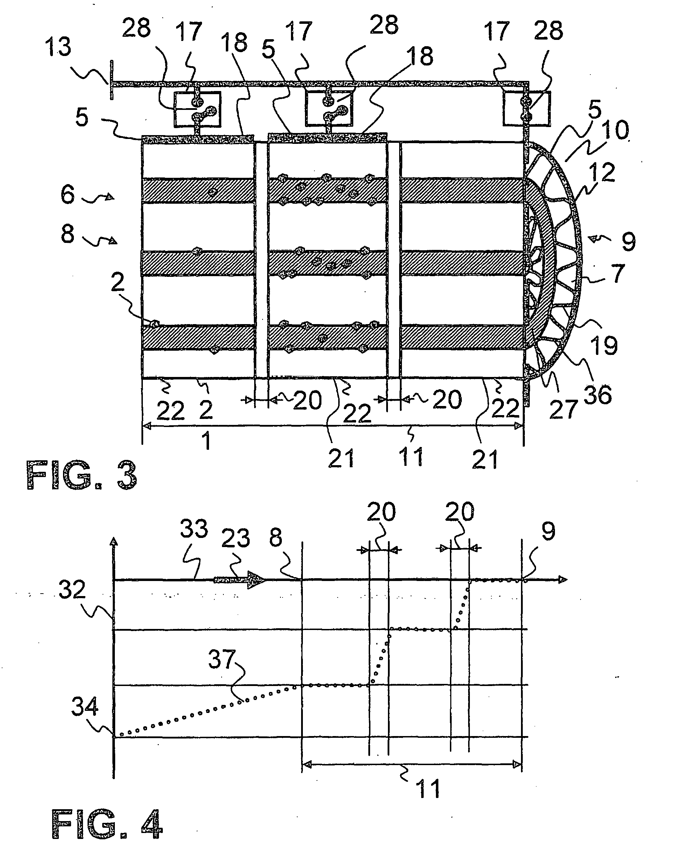

Fig. 3 zeigt einen Oberflächenabscheider 6 für eine erfindungsgemäße Vorrichtung 1. Der Oberflächenabscheider 6 gemäß Fig. 3 ist aus drei hintereinander angeordneten Wabenkörpern 21 aufgebaut. Die Wabenkörper 21 sind jeweils mit einem Abstand 20 zueinander beabstandet. Insgesamt weist der Oberflächenabscheider 6 eine Länge 11 auf. Im Oberflächenabscheider 6 sind jeweils drei Teilbereiche 21 vorgesehen, die jeweils einem der drei Wabenkörper 22 entsprechen. Jeder Teilbereich 21 ist einem Neutralisierungsbereich 5 zuordenbar. Der Oberflächenabscheider 6 weist einen Eintrittsbereich 8 und einen Austrittsbereich 9 auf. Zwei der Neutralisierungsbereiche 5 sind hier beispielhaft als flächige Kontaktierung 18 ausgeführt. Ein Neutralisierungsbereich 5 ist als ringförmige Elektrode 12 ausgeführt. Die Neutralisierungsbereiche 5 sind jeweils über Ansteuerungsmittel 17 ansteuerbar. Die Ansteuerungsmittel 17 umfassen jeweils ein Schaltelement 28. Mit Hilfe der Schalelemente 28 in den Ansteuerungsmitteln 17 können die einzelnen Neutralisierungsbereiche einer elektrischen Masse 13 zugeschaltet werden. Die einzelnen Wabenkörper 22 weisen jeweils Kanäle 7, eine Querschnittsfläche 10 und Kanalwandungen 19, auf. Die Kanalwandungen 19 sind hier aus einer gewellten Metallfolie 36 und einem Vlies 27 gebildet. Am Vlies 27 kann besonders gut eine Ablagerung von Rußpartikeln erfolgen. Die Ablagerung wird teilweise auch im Vlies 27 erfolgen. Deshalb ist das Vlies Bestandteil des Oberflächenabscheiders 6.

In der Fig. 3 ist der mittlere Wabenkörper 22 besonders stark mit Rußpartikeln 2 gefüllt. Ausgehend vom Eintrittsbereich 8 betrachtet, sind die vorderen beiden Wabenkörper 22 mit Hilfe der Schalterelemente 28 in den jeweiligen Ansteuerungselementen 17 deaktiviert. Der letzte Wabenkörper 22 ist mit Hilfe des Schaltelementes 28 in dem zugeordneten Ansteuerungselement 17 aktiviert. Dementsprechend erfolgt gemäß Fig. 3 bevorzugt eine Anlagerung von Rußpartikeln 2 im letzten Wabenkörper 22.

Fig. 4 zeigt beispielhaft ein elektrisches Potential 37, wie es in einer erfindungsgemäßen Vorrichtung 1 vorliegen kann. Auf der Spannungsachse 32 ist das elektrische Potential 37 über die Längsachse 33 der erfindungsgemäßen Vorrichtung aufgetragen. Abgas durchströmt die Vorrichtung entlang der Längsachse 33 mit der Strömungsrichtung 23. Zu Beginn liegt das Ionisierungspotential 34 vor. Dieses wird durch die an dem Ionisierungselement 4 anliegende Ionisierungsspannung aufrecht erhalten. Dann erhöht sich entlang der Längsachse 33 und der Abgasströmungsrichtung 23 das Potential bis zum Eintrittsbereich 8 in den Oberflächenabscheider 6. Im Oberflächenabscheider 6 steigt das Potential 37 stufenförmig an. Es sind beispielweise einzelne elektrisch leitfähige Wabenkörper 22 im Oberflächenabscheider 6 vorgesehen und die einzelnen Potentiale 37 in diesen Wabenkörpern 22 werden mit Hilfe von separaten Spannungsquellen 14 in jeweils zugeordneten Ansteuerungsmittel 17 aufrecht erhalten. Innerhalb der elektrisch leitfähigen Wabenkörper 22 existiert kein elektrisches Feld, so dass die Potentiale 37 hier jeweils konstant sind. Die einzelnen Wabenkörper 22 sind jeweils mit einem Abstand 20 voneinander beabstandet. Über die Abstände 20 liegt aufgrund der Potentialdifferenzen der einzelnen Wabenkörper 22 jeweils ein elektrisches Feld vor und das Potential 37 steigt zwischen den Wabenkörpern kontinuierlich an.

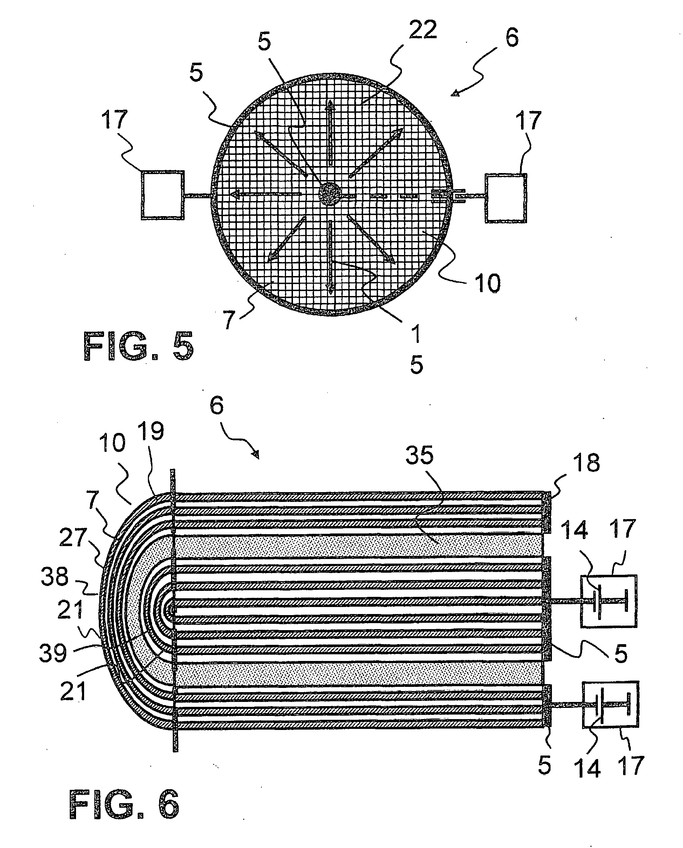

In Fig. 5 ist eine Querschnittsfläche 10 eines Oberflächenabscheiders 6 dargestellt. Der Oberflächenabscheider 6 gemäß Fig. 5 hat im Inneren einen Neutralisierungsbereich 5 und an seiner Außenfläche einen Neutralisierungsbereich 5. Der im Oberflächenabscheider 6 angeordnete Wabenkörper 22 ist nicht elektrisch leitfähig, so dass sich, ausgehend vom inneren Ionisierungsbereich 5 hin zum äußeren Ionisierungsbereich 5, ein elektrisches Feld 15 ausbilden kann. Durch ein derartiges elektrisches Feld 15 können ionisierte Rußpartikel aus dem Innenbereich des Oberflächenabscheiders 6 in den Außenbereich des Oberflächenabscheiders 6 transportiert werden. Mit Hilfe der Ansteuerungsmittel 17 können die an den lonisierungsbereichen 5 jeweils anliegenden Spannungen bzw. Potentiale variiert werden.

Fig. 6 zeigt einen Oberflächenabscheider 6, welcher über die Querschnittsfläche 10 mehrere mit Hilfe einer Isolierung 35 zueinander isolierte Teilbereiche 21 aufweist. Den Teilbereichen 21 sind jeweils Neutralisierungsbereiche 5 zugeordnet und mit flächigen Kontaktierungen kontaktiert. Die Neutralisierungsbereiche 5 weisen jeweils Ansteuerungsmittel 17 und Spannungsquellen 14 auf. Der Oberflächenabscheider 6 hat zudem Kanäle 7 und Kanalwände 19 aus Vlies 27. Bei einem derartigen Oberflächenabscheider 6 kann zielgerichtet gesteuert werden, ob die Ablagerung von ionisierten Rußpartikeln im radialen Außenbereich 38 oder im radialen Innenbereich 39 erfolgen soll.

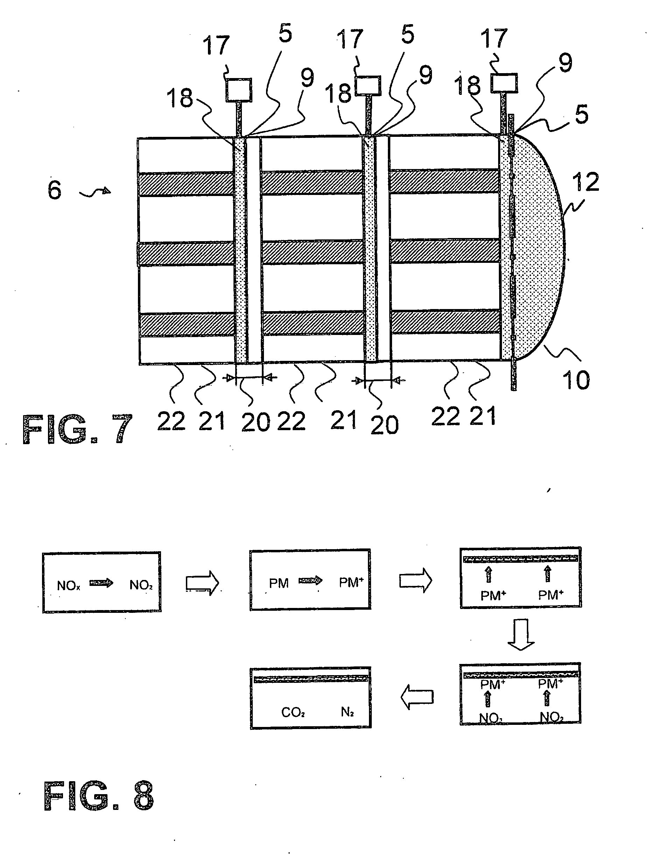

Fig. 7 zeigt einen Oberflächenabscheider 6, der aus scheibenförmigen keramischen Wabenkörpern 22 gebildet ist. Die Wabenkörper 22 bilden jeweils Teilbereiche 21 des Oberflächenabscheiders 6. Darüber hinaus sind die Wabenkörper 22 jeweils mit einem Abstand 20 zueinander beabstandet und mit einer flächigen Kontaktierung 18 an ihren jeweiligen Austrittsbereichen 9 versehen. Diese Kontaktierungen 18 bilden die Neutralisierungsbereiche 5. Die flächigen Kontaktierungen 18 überspannen dabei jeweils die gesamte Querschnittsfläche 10 des Oberflächenabscheiders 6. Ein derartiger Oberflächenabscheider 6 ermöglicht es, die Eindringtiefe von ionisierten Rußpartikeln in den Oberflächenabscheider 6 definiert einzustellen.

Fig. 8 soll noch einmal bildlich einzelne Verfahrensschritte veranschaulichen. Hier werden in einem ersten Schritt Stickoxide (NOₓ) bzw. Stickstoffmonoxid (NO) mittels der Stickstoffdioxid-Quelle (bzw. einer entsprechenden katalytischen Beschichtung) zu Stickstoffdioxid (NO₂) umgewandelt. Außerdem erfolgt eine Ionisierung der Rußpartikel (PM) bzw. eines Teiles der Rußpartikel, so dass diese eine elektrische Ladung aufweisen. Die ionisierten, bzw. elektrisch geladenen Rußpartikel (PM⁺) werden dann gleichmäßig an eine Kanalwand unter Zuhilfenahme entsprechender elektrostatischer Anziehungskräfte abgelagert, wobei dies nach Möglichkeit sehr gleichmäßig erfolgt. Die weiter beabstandeten, gegebenenfalls noch elektrisch geladenen oder sogar schon neutralisierten Rußpartikel (PM⁺/PM) sind frei zugänglich für das erzeugte Stickstoffdioxid (NO₂), so dass eine einfache und effektive Regenerierung der Ablagerungsfläche bzw. des Filtermaterials ermöglicht wird. Für diesen Umsetzungsvorgang können auch Katalysatoren unterstützend eingesetzt werden. Nach der Umsetzung der Rußpartikel werden die gasförmigen Restbestandteile aus dem Oberflächenabscheider entfernt, wie beispielsweise Kohlendioxid (CO₂) und elementaren Stickstoff (N₂).

### Bezugszeichenliste

- 1: Vorrichtung
- 2: Rußpartikel
- 3: Stickstoffdioxidquelle
- 4: Ionisierungselement
- 5: Neutralisierungsbereich
- 6: Oberflächenabscheider
- 7: Kanal
- 8: Eintrittsbereich
- 9: Austrittsbereich
- 10: Querschnittsfläche
- 11: Länge
- 12: ringförmige Elektrode
- 13: elektrische Masse
- 14: Spannungsquelle
- 15: elektrisches Feld
- 16: Kraftfahrzeug
- 17: Ansteuerungsmittel
- 18: flächige Kontaktierung
- 19: Kanalwand
- 20: Abstand
- 21: Teilbereich
- 22: Wabenkörper
- 23: Abgasströmungsrichtung
- 24: Verbrennungskraftmaschine
- 25: Abgassystem
- 26: Abscheidevorrichtung
- 27: Vlies
- 28: Schaltelement
- 29: Abgasleitung
- 30: Gehäuse
- 31: Sprühelektrode
- 32: Spannungsachse
- 33: Längsachse
- 34: Ionisierungspotential
- 35: Isolierung
- 36: Gewellte Metallfolie
- 37: Potentialkurve
- 38: radialer Außenbereich
- 39: radialer Innenbereich
- 40: Sauerstoffquelle

## Patentansprüche

1. Vorrichtung (1) zur Behandlung von Rußpartikel (2) enthaltendem Abgas, umfassend zumindest
- mindestens ein Ionisierungselement (4) zur Ionisierung von Rußpartikeln (2),
- mindestens eine Abscheidevorrichtung (26) mit einem Oberflächenabscheider (6) zur Ablagerung von ionisierten Rußpartikeln (2), die in Strömungsrichtung des Abgases hinter dem Ionisierungselement (4) angeordnet ist,
wobei die mindestens eine Abscheidevorrichtung (26) mindestens zwei zumindest teilweise elektrisch leitfähige und voneinander elektrisch isolierte Neutralisierungsbereiche (5) zur Neutralisation ionisierter Rußpartikel (2) aufweist, so dass bei Kontakt der elektrisch geladenen Rußpartikel (2) an einer Oberfläche eines Obertlächenabscheiders (6) in einem Neutrahsierunizsbereich (5) eine elektrische Neutralisation bzw. eine Entionisierung der Rußpartikel (2) stattfinden kann, und wobei den Neutralisierungsbereichen (5) jeweils Ansteuerungsmittel (17) zugeordnet sind, die zumindest eine elektrische Masse (13), eine einstellbare Sparmungsguelle (14) oder ein Schalterelement (28) umfassen.

2. Vorrichtung (1) nach Patentanspruch 1, wobei die Neutralisierungsbereiche (5) jeweils Teilbereichen (21) des mindestens einen Oberflächenabscheiders (6) zuordenbar sind.

3. Vorrichtung (1) nach einem der vorhergehenden Patentansprüche, bei der die mindestens zwei Neutralisierungsbereiche (5) als ringförmige Elektroden (12) und/oder als flächige Kontaktierung (18) ausgebildet sind.

4. Vorrichtung (1) nach einem der vorhergehenden Patentansprüche, wobei für jeden Neutralisierungsbereich (5) in der Abscheidevorrichtung (26) ein Wabenkörper (22) vorgesehen ist.

5. Vorrichtung (1) nach einem der vorhergehenden Ansprüche, bei der wenigstens eine Stickstoffdioxidquelle (3) oder eine Sauerstoffquelle (40) ausgebildet ist.

6. Verfahren zur Umsetzung von Rußpartikeln (2) eines Abgases, umfassend zumindest die folgenden Schritte:
a) Erzeugen von Stickstoffdioxid im Abgas,
b) Ionisieren von Rußpartikeln (2) mittels mindestens einem Ionisierungselement (4),
c) Ablagern von ionisierten Rußpartikeln (2) in mindestens einem Oberflächenabscheider (6) einer Abscheidevorrichtung (26) mit mindestens zwei elektrisch leitfähigen Neutralisierungsbereichen (5) zur Neutralisation ionisierter Rußpartikeln (2), wobei die Abscheidevorrichtung (6) in Strömungsrichtung des Abgases hinter dem Ionisierungselement (4) angeordnet ist, und
d) Inkontaktbringen von Stickstoffdioxid mit den abgelagerten Rußpartikeln (2) in dem mindestens einen Oberflächenabscheider (6),
wobei die mindestens zwei elektrisch leitfähigen Neutralisierungsbereiche (5) jeweils ein elektrisches Potential aufweisen und das elektrische Potential mindestens eines Neutralisierungsbereiches (5) von dem elektrischen Potential der übrigen Neutralisierungsbereiche (5) verschieden ist.

7. Verfahren nach Patentanspruch 6, wobei die elektrischen Potentiale der mindestens zwei Neutralisierungsbereiche (5) derart eingestellt sind, dass sich Rußpartikel (2) im Oberflächenabscheider (6) im Wesentlichen gleichmäßig ablagern.

8. Verfahren nach Patentanspruch 6 oder 7, wobei die elektrischen Potentiale der Neutralisierungsbereiche (5) zeitlich variiert werden.

9. Verfahren nach einem der Patentansprüche 6 bis 8, wobei die Neutralisierungsbereiche (5) jeweils Teilbereichen (21) des Oberflächenabscheiders (6) zuordenbar sind und ein Neutralisierungsbereich (5) deaktiviert wird, wenn im zugeordneten Teilbereich (21) des Oberflächenabscheiders (6) eine maximale Beladung mit Rußpartikeln (2) überschritten wurde.

10. Verfahren nach einem der Patentansprüche 6 bis 9, wobei alle Neutralisierungsbereiche (5) unterschiedliche elektrische Potentiale aufweisen und im Oberflächenabscheider (6) ein entlang einer Abgasströmungsrichtung (23) ansteigendes elektrisches Potential (15) vorliegt.

11. Verfahren zum Betrieb einer Vorrichtung nach einem der Patentansprüche 1 bis 5, wobei durch das Verfahren gemäß Patentanspruch 6 eine kontinuierliche Regeneration von Rußpartikeln, insbesondere des mindestens einen Oberflächenabscheiders (6), erfolgt.

12. Kraftfahrzeug (16), aufweisend eine Verbrennungskraftmaschine (24) mit einem Abgassystem (25), aufweisend eine Vorrichtung (1) gemäß einem der Patentansprüche 1 bis 5 oder mit einem Abgassystem (25), welches zur Durchführung eines Verfahrens gemäß einem der Patentansprüche 6 bis 11 eingerichtet ist.

## Claims

1. Device (1) for treating exhaust gas containing soot particles (2), comprising at least
- at least one ionization element (4) for ionizing soot particles (2),
- at least one separation device (26) having a surface separator (6) for depositing ionized soot particles (2), which is positioned downstream of the ionization element (4),
wherein the at least one separation device (26) comprises at least two at least partly electrically conductive neutralization regions (5), which are electrically insulated from one another, for neutralization of ionized soot particles (2), so that upon contact of the electrically charged soot particles (2) with a surface of a surface separator (6) in a neutralization region (5) an electrical neutralization and/or deionization of the soot particles may take place, and wherein control means (17) are assigned to the neutralization regions (5), wherein the control means having at least one of an electrical ground (13), an adjustable voltage source (14) or a switch element (28).

2. Device (1) as claimed in claim 1, wherein the neutralization regions (5) can each be assigned to sub-regions (21) of the at least one surface separator (6).

3. Device (1) as claimed in one of the preceding claims, wherein the at least two neutralization regions (5) are formed as annular electrodes (12) and/or as planar contacts (18).

4. Device (1) as claimed in one of the preceding claims, wherein a honeycomb body (22) is provided for each neutralization region (5) in the separation device (26).

5. Device (1) as claimed in one of the preceding claims, wherein at least one nitrogen dioxide source (3) or at least one oxygen source (40) is formed.

6. Method for converting soot particles (2) of an exhaust gas, comprising at least the following steps:
a) production of nitrogen dioxide in the exhaust gas;
b) ionization of soot particles (2) by means of at least one ionization element (4);
c) deposition of ionized soot particles (2) in at least one surface separator (6) of a separation device (26) having at least two electrically conductive neutralization regions (5) for neutralization of ionized soot particles (2), wherein the separation device (26) is positioned downstream of the ionization element (4); and
d) contacting of nitrogen dioxide with the deposited soot particles (2) in the at least one surface separator (6),
wherein the at least two electrically conductive neutralization regions (5) each comprise an electric potential, and the electric potential of at least one neutralization region (5) is different from the electric potential of the remaining neutralization regions (5).

7. Method as claimed in claim 6, wherein the electric potentials of the at least two neutralization regions (5) are set in such a way that soot particles (2) are deposited substantially uniformly in the surface separator (6).

8. Method as claimed in claim 6 or 7, wherein the electric potentials of the neutralization regions (5) are varied over time.

9. Method as claimed in one of claims 6 to 8, wherein the neutralization regions (5) can be assigned to sub-regions (21) of the surface separator (6), and a neutralization region (5) is deactivated if a maximum loading with soot particles (2) has been exceeded in the assigned sub-region (21) of the surface separator (6).

10. Method as claimed in one of claims 6 to 9, wherein all neutralization regions (5) comprise different electric potentials, and an electric potential (15) increasing along a direction of flow (23) of exhaust gas is present in the surface separator (6).

11. Method for operating a device as claimed in one of claims 1 to 5, wherein according to the method as claimed in claim 6 a continuous regeneration of soot particles, in particular of the at least one surface separator, takes place.

12. Motor vehicle (16), comprising an internal combustion engine (24) having an exhaust gas system (25) comprising a device (1) as claimed in one of claims 1 to 5, or having an exhaust gas system (25) which is designed to carry out a method as claimed in one of claims 6 to 11.

## Revendications

1. Dispositif (1) de traitement de gaz d'échappement contenant des particules de suie (2), le dispositif comportant :
au moins un élément d'ionisation (4) qui ionise les particules de suie (2),
au moins un dispositif de séparation (26) disposé en aval de l'élément d'ionisation (4) dans la direction d'écoulement du gaz d'échappement et doté d'un séparateur de surface (6) sur lequel viennent se déposer les particules de suie (2) ionisées,
le ou les dispositifs de séparation (26) présentant au moins deux zones de neutralisation (5) au moins en partie électriquement conductrices, isolées électriquement les unes des autres et destinées à neutraliser les particules de suie (2) ionisées de telle sorte que le contact des particules de suie (2) chargées électriquement avec une surface d'un séparateur de surface (6) dans une zone de neutralisation (5) permette de neutraliser électriquement ou de désioniser les particules de suie (2), des moyens de commande (17) qui comprennent au moins une masse électrique (13), une source réglable de tension (14) ou un élément de commutation (28) étant associés à chacune des zones de neutralisation (5).

2. Dispositif (1) selon la revendication 1, dans lequel chacune des zones de neutralisation (5) peut être associée une partie (21) du ou des séparateurs de surface (6).

3. Dispositif (1) selon l'une des revendications précédentes, dans lequel les deux ou plusieurs zones de neutralisation (5) sont configurées comme électrodes annulaires (12) et/ou comme contacts aplatis (18).

4. Dispositif (1) selon l'une des revendications précédentes, dans lequel un corps en nid d'abeilles (22) est prévu pour chaque zone de neutralisation (5) du dispositif de séparation (26).

5. Dispositif (1) selon l'une des revendications précédentes, présentant au moins une source (3) de dioxyde d'azote ou une source (40) d'oxygène.

6. Procédé de conversion de particules de suie (2) d'un gaz d'échappement, le procédé comportant au moins les étapes suivantes :
a) formation de dioxyde d'azote dans les gaz d'échappement,
b) ionisation des particules de suie (2) au moyen d'au moins un élément d'ionisation (4),
c) dépôt des particules de suie (2) ionisées dans au moins un séparateur de surface (6) d'un dispositif de séparation (26) qui présente au moins deux zones électriquement conductrices de neutralisation (5) qui neutralisent les particules de suie (2) ionisées, le dispositif de séparation (6) étant disposé en aval de l'élément d'ionisation (4) dans la direction d'écoulement des gaz d'échappement et
d) mise en contact du dioxyde d'azote avec les particules de suie (2) qui se sont déposées dans le ou les séparateurs de surface (6),
chacune des deux ou plusieurs zones de neutralisation (5) électriquement conductrices présentant un potentiel électrique, le potentiel électrique d'au moins une zone de neutralisation (5) étant différent du potentiel électrique des autres zones de neutralisation (5).

7. Procédé selon la revendication 6, dans lequel les potentiels électriques des deux ou plusieurs zones de neutralisation (5) sont établis de telle sorte que des particules de suie (2) se déposent de manière essentiellement uniforme dans le séparateur de surface (6).

8. Procédé selon les revendications 6 ou 7, dans lequel les potentiels électriques des zones de neutralisation (5) varient dans le temps.

9. Procédé selon l'une des revendications 6 à 8, dans lequel chacune des zones de neutralisation (5) peut être associé à une partie (21) du séparateur de surface (6) et une zone de neutralisation (5) est désactivée lorsque dans la partie (21) associée du séparateur de surface (6) une charge maximale en particules de suie (2) a été dépassée.

10. Procédé selon l'une des revendications 7 à 9, dans lequel toutes les zones de neutralisation (5) présentent des potentiels électriques différents, un potentiel électrique croissant (15) étant prévu dans la direction d'écoulement (23) des gaz d'échappement dans le séparateur de surface (6).

11. Procédé de gestion d'un dispositif selon l'une des revendications 1 à 5, dans lequel une régénération continue de particules de suie, en particulier du ou des séparateurs de surface (6), est réalisée à l'aide du procédé selon la revendication 6.

12. Véhicule automobile (16) présentant un moteur à combustion interne (24) doté d'un système (25) de gaz d'échappement et présentant un dispositif (1) selon l'une des revendications 1 à 5 ou un système (25) de gaz d'échappement conçu pour exécuter un procédé selon l'une des revendications 6 à 11.
